# EUROPEAN PATENT APPLICATION

(11) **EP 1 844 834 A1**
(43) Date of publication of application: **17.10.2007**
(21) Application number: 07251311.2
(22) Date of filing: 28.03.2007
(51) Int. Cl.: B01D 35/14, B01D 46/42, F16J 15/32

(54) **Filter seating monitor**

(30) Priority: 12.04.2006 US 402530
(71) Applicant: MILLIPORE CORPORATION, Billerica Massachusetts 01821 (US)
(72) Inventor: DiLeo, Anthony, Westford, MA 01886 (US)
(74) Representative: Kirkham, Nicholas Andrew

(57) **Abstract**

The present invention discloses a method and apparatus for monitoring the integrity of seals, especially those in filtering elements. In one embodiment, an electrically conductive material is used as the sealing material. The resistance of this material is monitored, since it is known that electrical resistance is a function of the compression or strain on the material. In a second embodiment, one or more switches are installed in or on the end cap of the filtering element. These switches engage when the filtering element is properly seated. This information can then be conveyed to the operator, such as via wireless communication.

## Description

In many applications, it is necessary for one device to be seated atop or within another device. In many of these applications, the devices are required to form either an airtight or watertight seal. Examples of these types of applications include the interface between an automobile oil filters and the engine, the interface between a liquid container and its lid, and others. Traditionally, it is common practice to use a compressible material interposed between the devices to provide this seal. This compressible material may take many forms, such as but not limited to, gaskets, or 0-rings.

One such application in which compressible material is used to form a seal is in the area of pharmaceutical filtering. In this application, one or more filter elements typically are placed within a housing and a liquid is passed through the filter elements to remove certain unwanted particulates. Since the filtering operation typically is performed under pressure, it is imperative that the filter elements are airtight and/or watertight. Should the seal not meet these requirements, integrity failures may result, thereby rendering the filtered liquid unusable.

Traditionally, this risk is addressed via visual inspection. In other words, when the filtering element is seated, the operator visually checks that the sealing material, typically a dual o-ring, is properly positioned. However, since these seats are tight and require significant pressure to seal properly, at times the o-ring may appear properly seated when it is not, and in other cases, it may be difficult to view the entire circumference of the ring. Thus, while a visual inspection is helpful, it is unable to detect all sealing failures. Consequently, there are instances where integrity failures occur, thereby rendering the filtered results unusable.

### SUMMARY OF THE INVENTION

The present invention overcomes the shortcomings of the prior art by disclosing a method and apparatus for monitoring the integrity of seals, especially those in filtering elements. In one embodiment, an electrically conductive material is used as the sealing material. The resistance of this material is monitored, since it is well known that electrical resistance is a function of the compression or strain on the material. This activity can be performed using a variety of techniques. For example, a circuit, affixed to, or integral with the gasket can be used. Alternatively, the circuit can be external to the gasket and be placed in contact with the gasket at a plurality of locations. In a second embodiment, a conductive (or partially conductive) o-ring or gasket can contact electrical leads embedded in the housing at a specific location when properly seated. In a third embodiment, one or more switches are installed in or on the nose of the filtering element. These switches engage when the filtering element is properly seated. This information can then be conveyed to the operator, such as via wireless communication.

### BRIEF DESCRIPTION OF THE DRAWINGS

Figure 1 illustrates a first embodiment of the present invention; and
Figure 2 illustrates a second embodiment of the present invention.

### DETAILED DESCRIPTION OF THE INVENTION

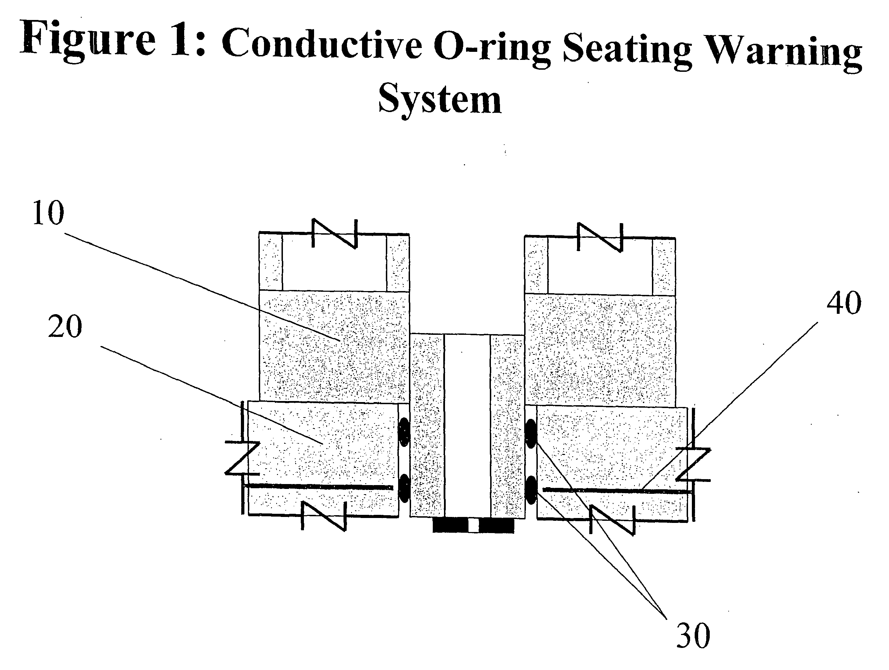

Figure 1 illustrates a representative filtering system in accordance with the present invention. The filter element 10 is enclosed within a housing 20. The filter element can be simply a porous material, such as pleated paper. Alternatively, the filter element may comprise a frame, such as of plastic, and a porous material. The filter element is in contact with the housing 20. This contact forms a seal and is preferably airtight and watertight. In certain embodiments, a gasket 30, such as an o-ring, is used to provide such a seal. For the seal to meet these requirements, the gasket must be properly seated. As stated earlier, this is traditionally verified via visual inspection. This technique can be flawed and therefore, may not identify all of the improperly seated gaskets. Consequently, time and material is lost due to integrity failures caused by improperly seated gaskets. Therefore, an improvement increasing the likelihood of detecting a sealing failure would be beneficial.

The first embodiment of the present invention includes an electrically conductive gasket. It is well known that materials change their conductivity under forces of compression. This is the basic theory employed in load cells. By utilizing this concept, it may be possible to determine whether the gasket is improperly seated. For example, a properly seated gasket would experience a certain amount of compression evenly distributed throughout. An improperly sealed gasket may have areas of no compression and other areas of increased compression, due to being rolled or twisted. The result would be that the overall conductivity of the gasket would be different than that of a properly seated one. This difference in conductivity would then alert the operator to visually inspect the seal, or to simply re-seat the gasket before continuing.

In one embodiment, the filter housing has two or more locations at which the gasket can be contacted. A circuit is located at a position exterior to the housing. In one embodiment, the circuit generates a known voltage between the contact points. Thus, when the gasket is in place, the circuit can measure the current flow between the contact points to determine the resistance of the gasket. This resistance can then be evaluated against acceptable ranges. Alternatively, the circuit can be designed to produce a constant current. In this scenario, the circuit measures the voltage difference between the contact points to determine the resistance.

In a modification to the previous embodiment, the housing is designed with a tapered end, into which the filtering element is placed. Thus, in addition to detecting seating errors caused by gasket rolling, the circuit can also detect the relative position of the gasket within the tapered end. In other words, as the filtering element is pushed further into the tapered end, the compression force exerted on the gasket increases. Thus, the circuit is indirectly able to derive the location of the gasket within the tapered end of the housing.

In some instances, it may be difficult to provide a conduit through which the wires carrying the electrical signals can pass, especially if the gasket is contained within a housing. In another embodiment, the ability to sense the conductivity would be integral with the gasket. For example, a circuit capable of passing a known current through the gasket and recording the resulting voltage drop could be integrated into the gasket. Alternatively, a known voltage could be applied across the gasket and the resulting current could be recorded. As described above, in either case, the resistance of the gasket can be readily determined from these parameters. Other methods of computing the resistance of the gasket are well known in the art, and are within the scope of the present invention. The resulting value can then be communicated wirelessly to the operator, such as by using an RFID tag. This value can then be compared to a predetermined range, to determine that the gasket is properly seated.

Alternatively, rather than incorporating a measuring circuit within the gasket, an open circuit is incorporated in the filter housing. As before, an electrically conductive gasket is used. One or more electrical leads are incorporated in the head of the housing within which the filter is to be seated. When the gasket, and therefore the filter, is properly seated, the open electrical circuit within the housing is completed by the conductive gasket, since it is in direct contact with the electrical leads. This result is then used to alert the operator that the sealing element is properly seated. Thus, rather than measuring the actual compression of the gasket, this embodiment performs a more simple connectivity test to verify that there is a conductive path between the electrical leads.

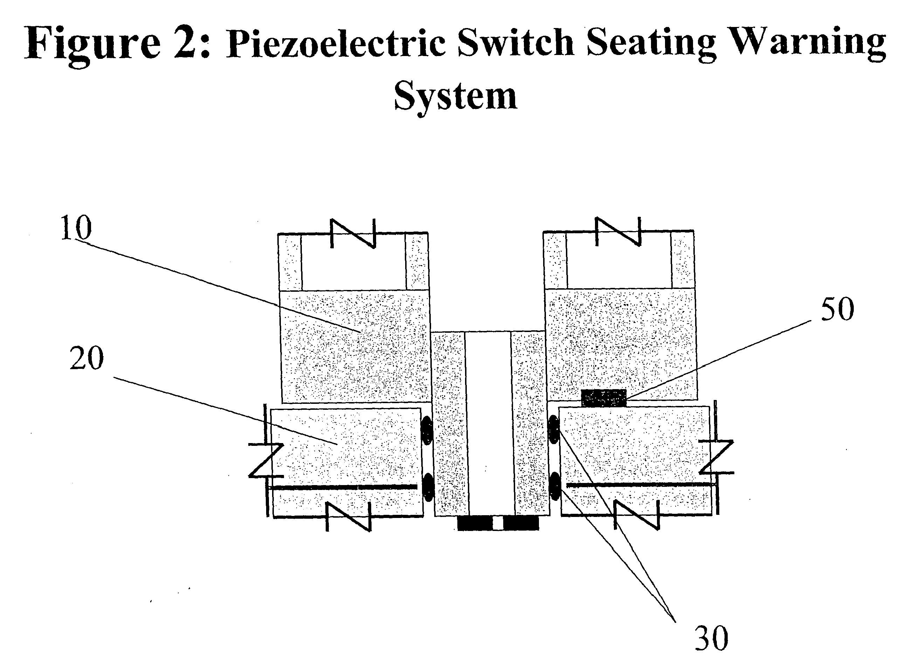

In another embodiment, shown in Figure 2, one or more sensors 50, such as but not limited to piezoelectric switches, can be embedded in the nose of the filter. These switches would be engaged (i.e. closed) when the filter is properly seated through contact with the housing. Alternatively, these switches may be positioned within the housing, such that they are engaged when the sealing element is properly seated on them. These switches may be in contact with a wireless transmitter, such as an RFID tag. This allows their status to be wirelessly relayed to the operator. The operator can then use this information to determine whether it appears that the filter is properly seated. Alternatively, if the switches are positioned within the housing, the associated circuitry can be directly wired to them. In the manner described above, the operator is notified of the seating status.

## Claims

1. A method for insuring the proper seating of a sealing element, comprising:
a. providing a conductive sealing element;
b. providing a circuit adapted to measure the conductivity of said sealing element;
c. utilizing said circuit to measure said conductivity; and
d. determining whether said measured conductivity is within a predetermined range, wherein said predetermined range represents conductivity values of a properly seated sealing element.

2. The method of claim 1, wherein said circuit is in communication with said sealing element through a plurality of contacts.

3. The method of claim 1 or 2, wherein said sealing element is located within a housing and said circuit is either located outside of said housing, or located within said housing.

4. The method of claim 1, 2 or 3, wherein said determination is transmitted to an operator.

5. The method of claim 4, wherein said transmission is performed using wireless communication.

6. A sealing element capable of alerting an operator of its seating status, comprising:
a. a conductive material, having a known coefficient of conduction;
b. a circuit in communication with said material, adapted to measure the conductivity of said material; and
c. means for transmitting said status to said operator.

7. The sealing element of claim 6, wherein said means for transmitting comprises wireless communication; and/or said means of transmitting comprises an RFID tag.

8. The sealing element of claim 6 or 7, wherein said status either comprises said measured conductivity, or comprises an indication that said measured conductivity is within a predetermined range.

9. A system for use with a housing, capable of alerting an operator of the seating status of a sealing element within said housing, comprising:
a. said sealing element comprising a conductive material;
b. a circuit;
c. at least two leads embedded in an inner surface of said housing so as to contact said sealing element when seated and also in communication with said circuit; and
d. means for transmitting said status to said operator.

10. The system of claim 9, wherein said circuit produces a current between said leads and measures the voltage drop between said leads; and/or said circuit produces a voltage between said leads and measures the current between said leads.

11. The system of claim 9 or 10, wherein said status is the measured conductivity of said sealing element.

12. The system of claim 9, 10 or 11, wherein said housing comprises a tapered end into which said sealing element is placed, such that the compression of said sealing element increases as said sealing element is placed deeper into said tapered end.

13. A method for insuring the proper seating of a sealing element within a housing, comprising:
a. providing at least one sensor positioned between said sealing element and said housing so as to engage when said sealing element is properly seated;
b. providing a circuit in communication with said at least one sensor to detect the state of said sensor;
c. detecting the state of said at least one sensor; and
d. alerting an operator of the seating status of said sealing element.

14. A system for use with a housing, capable of alerting an operator of the seating status of a sealing element within said housing, comprising:
a. said sealing element;
b. at least one sensor positioned between said housing and said sealing element;
c. a circuit in communication with said at least one sensor, so as to detect the state of said sensor; and
d. means for transmitting said seating status to said operator.

15. The system of claim 14, wherein said seating status is based on the state of said at least one sensor; and/or said at least one sensor is located on the inner surface of said housing.

16. A method for insuring the proper seating of a sealing element between a filter element and a housing, comprising:
a. providing at least one sensor positioned between said sealing element and said filter element so as to engage when said sealing element is properly seated;
b. providing a circuit in communication with said at least one sensor to detect the state of said sensor;
c. detecting the state of said at least one sensor; and
d. alerting an operator of the seating status of said sealing element.

17. The method of claim 13 or 16, whereby said alerting is performed by communicating said state of said at least one sensor to said operator; and/or wherein said communication is wireless; and/or wherein said communication is provided by an RFID tag.

18. A system for use with a housing, capable of alerting an operator of the seating status of a sealing element located between a filter element and said housing, comprising:
a. said sealing element;
b. at least one sensor positioned between said filter element and said sealing element;
c. a circuit in communication with said at least one sensor, so as to detect the state of said sensor; and
d. means for transmitting said seating status to said operator.

19. The system of claim 18, wherein said seating status is based on the status of said at least one sensor; and/or said at least one sensor is located on the outer surface of said filter element.
